(19) **Europäisches Patentamt**
**European Patent Office**
**Office européen des brevets**

(11) **EP 1 581 806 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(21) Anmeldenummer: **03785563.2**

(22) Anmeldetag: **12.12.2003**

(51) Int Cl.:
*G01N 27/407* (2006.01)  *G01N 33/00* (2006.01)

(86) Internationale Anmeldenummer:
**PCT/DE2003/004110**

(87) Internationale Veröffentlichungsnummer:
**WO 2004/057322 (08.07.2004 Gazette 2004/28)**

(54) **SENSORELEMENT MIT MITTEL ZUR VERRINGERUNG DES DIFFUSIONSQUERSCHNITTS**

SENSOR ELEMENT HAVING MEANS FOR REDUCING THE DIFFUSION CROSS-SECTION

ELEMENT DETECTEUR AVEC UN REDUCTEUR DE LA SECTION EFFICACE DE DIFFUSION

(84) Benannte Vertragsstaaten:
**DE ES FR GB IT**

(30) Priorität: **19.12.2002 DE 10259526**

(43) Veröffentlichungstag der Anmeldung:
**05.10.2005 Patentblatt 2005/40**

(73) Patentinhaber: **ROBERT BOSCH GMBH**
**70442 Stuttgart (DE)**

(72) Erfinder:
• **WIEDENMANN, Hans-Martin**
**70195 Stuttgart (DE)**

• **DIEHL, Lothar**
**70839 Gerlingen (DE)**
• **MOSER, Thomas**
**71701 Schwieberdingen (DE)**
• **RODEWALD, Stefan**
**71254 Ditzingen (DE)**

(56) Entgegenhaltungen:
**EP-A- 0 016 423    WO-A-01/71333**
**DE-A- 3 728 189    US-A- 4 446 000**
**US-A- 5 879 527**

**Beschreibung**

Stand der Technik

Die Erfindung geht aus von einem Sensorelement nach dem Oberbegriff des unabhängigen Anspruchs.

Ein derartiges Sensorelement ist beispielsweise aus der DE 100 13 882 A1 bekannt. Das Sensorelement ist in Planartechnik schichtförmig aufgebaut und enthält einen Messgasraum, in dem auf gegenüberliegenden Seiten zwei ringförmige Elektroden angeordnet sind. Die beiden Elektroden sind jeweils Teil einer elektrochemischen Zelle, zu der eine weitere Elektrode sowie ein zwischen den Elektroden angeordneter Festelektrolyt gehört. Die beiden im Messgasraum angeordneten Elektroden sind über eine hohlzylinderförmige Diffusionsbarriere und eine Gaszutrittsöffnung mit einem außerhalb des Sensorelements befindlichen Messgas verbunden. Die Gaszutrittsöffnung mündet in die Mitte der Diffusionsbarriere. Die eine der beiden elektrochemischen Zellen wird als Nernstzelle betrieben, bei der sich zwischen der Elektrode im Messgasraum und einer einem Referenzgas ausgesetzten Elektrode eine Spannung (Nernstspannung) ausbildet, die ein Maß für das Verhältnis des Sauerstoffpartialdrucks an der Elektrode im Messgasraum und der dem Referenzgas ausgesetzten Elektrode ist.

Die Diffusionsbarriere ist in einen grobporösen und einen feinporösen Abschnitt unterteilt. Der grobporöse Abschnitt weist ein katalytisch aktives Material zur Einstellung des Gleichgewichtes im Gasgemisch auf.

Bei plötzlichem Druckanstieg im Messgas, also bei sogenannten Druckpulsen, erhöht sich auch der Druck im Messgasraum. Bei ansonsten gleicher Messgaszusammensetzung erhöht sich durch den Druckpuls der Sauerstoffpartialdruck an den Elektroden im Messgasraum und damit auch die Nernstspannung. Das Sensorelement reagiert also bei gleicher Messgaszusammensetzung, insbesondere bei gleichem Sauerstoffanteil, auf eine Änderung des Sauerstoffpartialdrucks. Es ist jedoch gewünscht, dass das Messsignal des Sensorelements den Sauerstoffanteil des Messgases, also der prozentuale Anteil des Sauerstoffs im Messgas wiedergibt, und nicht die durch Druckschwankungen bedingten Änderungen des Sauerstoffpartialdrucks.

In der EP-A-0 0 16 423 ist ein Gasdetektor mit einem elektrochemischen Sensor offenbart, wobei der Sensor mit der zu untersuchenden Gasatmosphäre über eine Eintrittsblende und eine Filtermembran in Verbindung steht.

Vorteile der Erfindung

Das erfindungsgemäße Sensorelement mit den kennzeichnenden Merkmalen des unabhängigen Anspruchs hat demgegenüber den Vorteil, dass die Abhängigkeit des Messsignals des Sensorelements von Druckschwankungen bei ansonsten gleicher Messgaszusammensetzung reduziert wird.

Das Sensorelement weist eine Elektrode auf, die mit dem Messgas über einen Diffusionsweg verbunden ist, in dem eine Diffusionsbarriere angeordnet ist. Das Messgas gelangt entlang des Diffusionsweges über die Diffusionsbarriere zur Elektrode. Der Diffusionsstrom des Sauerstoffs durch die Diffusionsbarriere bis zur Elektrode hängt von der Ausgestaltung der Diffusionsbarriere ab.

Ein plötzlicher Druckanstieg des Messgases äußert sich in einem Druckpuls, der sich entlang des Diffusionsweges durch die Diffusionsbarriere bis zur Elektrode ausbreitet. Das Messgas hat dabei auf der der Elektrode abgewandten Seite eine vergleichsweise hohe Geschwindigkeit, die sich beim Durchtritt durch die Diffusionsbarriere bis hin zur Elektrode verringert. Eine Verringerung der Geschwindigkeit des Druckpulses bewirkt, dass plötzliche Druckschwankungen bis zum Erreichen der Elektrode gedämpft werden, so dass der Einfluss des Druckpulses auf das Messsignal verringert wird.

Es hat sich gezeigt, dass die Druckpulse am wirkungsvollsten in einem Bereich verringert werden, in dem das Messgas eine hohe Gasgeschwindigkeit hat. Daher ist in dem von der Elektrode abgewandten Bereich der Diffusionsbarriere ein Mittel vorgesehen, das den Diffusionsquerschnitt in diesem von der Elektrode abgewandten Bereich verringert.

Unter dem Diffusionsquerschnitt ist hier und im folgenden die offene Fläche senkrecht zur Diffusionsrichtung zu verstehen. Die offene Fläche ist die Fläche, durch die das Messgas hindurchtreten kann. Bei einer porösen Diffusionsbarriere ist die offene Fläche die Fläche, die in einem zweidimensionalen Schnitt von den Poren eingenommen wird.

Der Diffusionsquerschnitt bezieht sich auf eine Fläche senkrecht zur Diffusionsrichtung. Bei einer hohlzylinderförmigen Diffusionsbarriere, bei der das Messgas beziehungsweise der Sauerstoff von der inneren Mantelfläche zur äußeren Mantelfläche diffundiert, ist die Strömungsrichtung von der inneren Mantelfläche radial nach außen gerichtet. Der Diffusionsquerschnitt bezieht sich daher auf Flächen mit konstantem Abstand von der Mittelachse der hohlzylinderförmigen Diffusionsbarriere.

Durch die in den abhängigen Ansprüchen aufgeführten Maßnahmen sind vorteilhafte Weiterbildungen des im unabhängigen Anspruch genannten Verfahrens möglich.

Das Mittel zur Verringerung des Diffusionsquerschnitts ist gasundurchlässig oder weist einen niedrigeren Porenanteil als die Diffusionsbarriere auf.

Erfindungsgemäß die Diffusionsbarriere eine im wesentlichen zylindrische oder hohlzylindrische Form und ist von einer ringförmigen Elektrode umgeben. Das Messgas gelangt über eine Gaszutrittsöffnung und durch die Diffusionsbarriere zur Elektrode. Aufgrund der Geometrie vergrößert sich der Diffusionsquerschnitt linear mit dem Abstand zur Mittelachse der Diffusionsbarriere. Diese Querschnittsvergrößerung bewirkt eine zusätzliche Dämpfung des Druckpulses. Das Mittel zur Verringerung des Diffusionsquerschnitts im Bereich der der Elektrode abgewandten Seite der Diffusionsbarriere ist so gestaltet, dass

$$\frac{A_1}{r_1} > \frac{A_2}{r_2},$$

wobei die Radien $r_1$ und $r_2$ auf die Mittelachse der Diffusionsbarriere bezogen sind, wobei $A_1$ den Diffusionsquerschnitt mit dem Abstand $r_1$ zur Mittelachse der Diffusionsbarriere und $A_2$ den Diffusionsquerschnitt mit dem Abstand $r_2$ zur Mittelachse der Diffusionsbarriere bezeichnet, wobei das den Diffusionsquerschnitt verkleinernde Mittel im Abstand $r_2$, aber nicht im Abstand $r_1$ zur Mittelachse der Diffusionsbarriere liegt, und wobei $r_1$ größer als $r_2$ ist. Das Mittel zur Vergrößerung des Diffusionswiderstands ist also so gestaltet, dass der Diffusionsquerschnitt im Bereich der Diffusionsbarriere stärker als linear mit dem Abstand zur Mittelachse anwächst.

Hierzu ist in einer bevorzugten Ausführungsbeispiel das Mittel ein ringförmiges Element, das im Bereich der inneren Mantelfläche der Diffusionsbarriere und/oder im Bereich der Gaszutrittsöffnung vorgesehen ist. Bei einem alternativen Ausführungsbeispiel ist das Mittel ein oder mehrere pfeilerartige Elemente, die im Bereich der inneren Mantelfläche der Diffusionsbarriere und/oder im Bereich der Gaszutrittsöffnung vorgesehen sind und deren Höhe der Höhe der Diffusionsbarriere entspricht.

Zeichnung

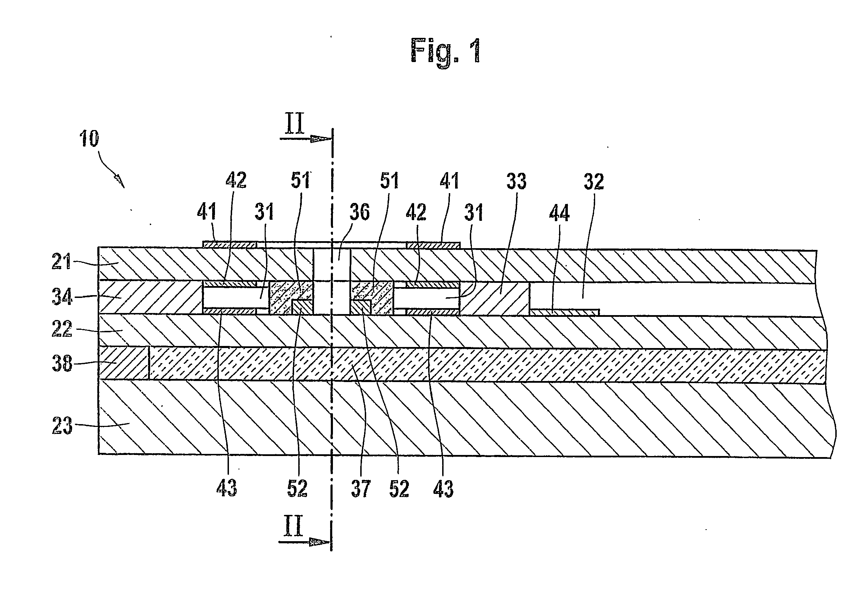

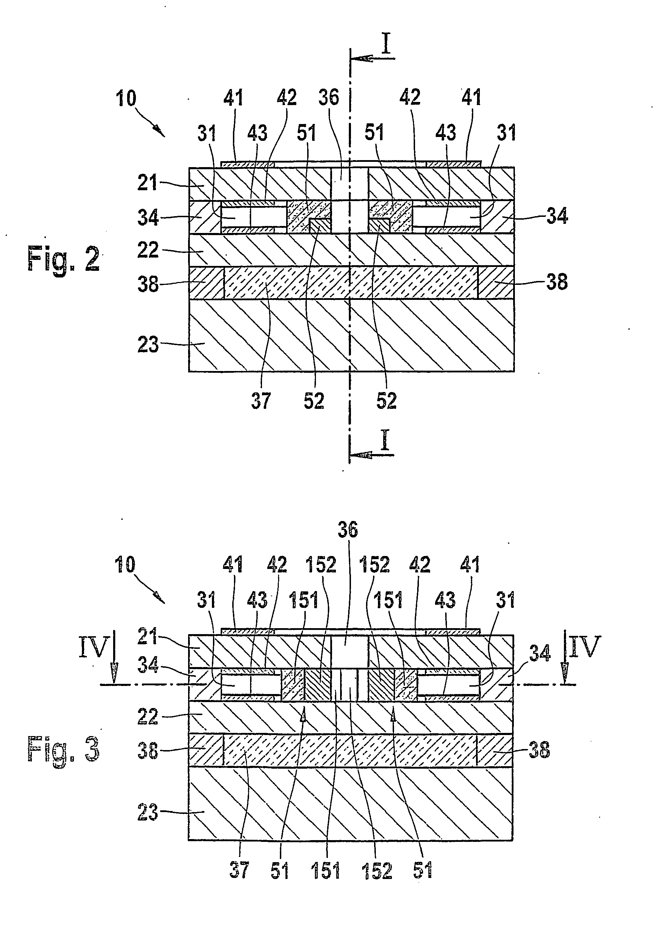

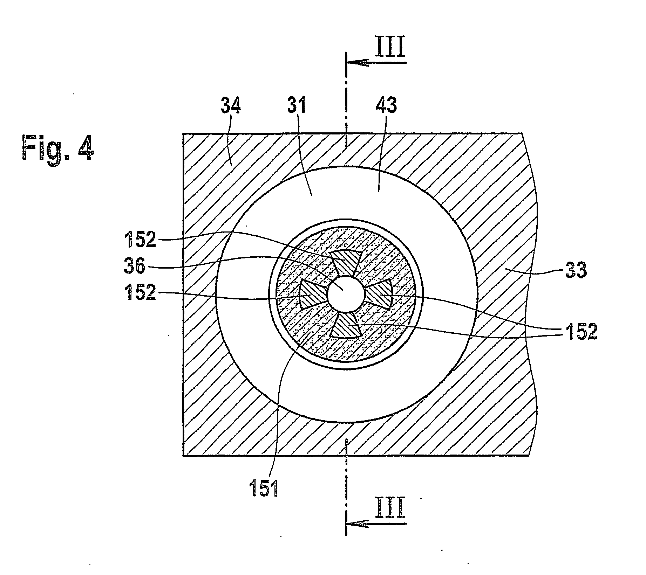

Zwei Ausführungsbeispiele der Erfindung sind in der Zeichnung dargestellt und in der nachfolgenden Beschreibung näher erläutert. Figur 1 zeigt als erstes Ausführungsbeispiel der Erfindung einen Längsschnitt durch ein erfindungsgemäßes Sensorelement gemäß der Linie I - I in Figur 2, Figur 2 zeigt einen Schnitt durch das erste Ausführungsbeispiel gemäß der Linie II - II in Figur 1, Figur 3 zeigt als zweites Ausführungsbeispiel der Erfindung einen Schnitt senkrecht zur Längsachse des Sensorelements gemäß der Linie III - III in Figur 4, und Figur 4 zeigt einen Schnitt durch das zweite Ausführungsbeispiel gemäß der Linie IV - IV in Figur 3.

Beschreibung des Ausführungsbeispiels

Figur 1 und Figur 2 zeigen als erstes Ausführungsbeispiel der Erfindung ein planares, schichtförmig aufgebautes Sensorelement 10, das in einem Gehäuse gasdicht angeordnet ist und dem Nachweis des Sauerstoffanteils in einem Abgas einer Brennkraftmaschine dient. In Figur 1 dargestellt ist der die Messelemente enthaltende Abschnitt des Sensorelements 10. Der nicht dargestellte Abschnitt des Sensorelements 10 enthält den Zuleitungsbereich und den Kontaktierungsbereich, deren Aufbau dem Fachmann bekannt ist.

Das Sensorelement 10 weist eine erste, eine zweite und eine dritte Festelektrolytschicht 21, 22, 23 auf. In das Sensorelement 10 ist zwischen der ersten und der zweiten Festelektrolytschicht 21, 22 ein ringförmiger Messgasraum 31 eingebracht, in dessen mittlerem Bereich eine ebenfalls ringförmige, porös ausgebildete Diffusionsbarriere 51 vorgesehen ist. Das außerhalb des Sensorelements 10 befindliche Messgas kann über eine Gaszutrittsöffnung 36, die in die erste Festelektrolytschicht 21 eingebracht ist und in die Mitte der Diffusionsbarriere 51 mündet, und durch die Diffusionsbarriere 51 in den Messgasraum 31 gelangen. Der Messgasraum 31 ist seitlich durch einen Dichtrahmen 34 abgedichtet.

Zwischen der ersten und der zweiten Festelektrolytschicht 21, 22 ist weiterhin ein Referenzgasraum 32 vorgesehen, der durch ein Trennelement 33 vom Messgasraum 31 gasdicht getrennt ist und der sich in Richtung der Längsachse des Sensorelements 10 erstreckt. Der Referenzgasraum 32 enthält als Referenzgas ein Gas mit einem hohen Sauerstoffanteil, beispielsweise Umgebungsluft.

Zwischen der zweiten und der dritten Festelektrolytschicht 22, 23 ist ein Heizelement 37 vorgesehen, das eine Heizerleiterbahn enthält, die durch eine Isolierung von den umgebenden Festelektrolytschichten 22, 23 getrennt ist. Das Heizelement 37 ist seitlich von einem Heizerrahmen 38 umgeben, der das Heizelement 37 elektrisch isoliert und gasdicht abdichtet.

Auf der Außenfläche der ersten Festelektrolytschicht 21 ist eine ringförmige erste Elektrode 41 vorgesehen, in deren Mitte die Gaszutrittsöffnung 36 liegt. Im Messgasraum 31 ist auf der der ersten Elektrode 41 gegenüberliegenden Seite der ersten Festelektrolytschicht 21 eine ringförmige zweite Elektrode 42 aufgebracht. Auf der zweiten Festelektrolytschicht 22 ist im Messgasraum 31 (der zweiten Elektrode 42 gegenüberliegend) eine ebenfalls ringförmige dritte Elektrode 43 angeordnet. Eine vierte Elektrode 44 ist im Referenzgasraum 32 auf der zweiten Festelektrolytschicht 22 vorgesehen.

Die erste und die zweite Elektrode 41, 42 und der zwischen der ersten und der zweiten Elektrode 41, 42 liegenden Festelektrolyt 21 bilden eine elektrochemische Zelle, die durch eine außerhalb des Sensorelements 10 angeordnete Beschaltung als Pumpzelle betrieben wird. Ebenso bildet die dritte und die vierte Elektrode 43, 44 und der zwischen der dritten und der vierten Elektrode 43, 44 liegende Festelektrolyt 22 eine als Nernstzelle betriebene elektrochemische Zelle. Die Nernstzelle misst den Sauerstoffpartialdruck im Messgasraum. Die Pumpzelle pumpt derart Sauerstoff in den oder aus dem Messgasraum, dass im Messgasraum ein Sauerstoffpartialdruck von Lambda=1 vorliegt. Derartige Sensorelemente sind dem Fachmann als Breitband-Lambda-Sonden bekannt.

Die Diffusionsbarriere 51 weist eine ringförmige Aussparung auf, die sich von der inneren Mantelfläche radial nach außen erstreckt. Die Aussparung nimmt ungefähr die Hälfte der Höhe der Diffusionsbarriere 51 ein. In der Aussparung ist ein gasundurchlässiges Element 52 vorgesehen, das der Verringerung des Diffusionsquerschnitts im Bereich der inneren Mantelfläche der Diffusionsbarriere 51 dient. Das Element 52 ist auf der der zweiten Festelektrolytschicht 22 zugewandten Seite der Diffusionsbarriere 51 angeordnet. Die Erfindung ist jedoch unabhängig von der genauen Position des Elements 52. So kann das Element 52 auch benachbart zur ersten Festelektrolytschicht 21 vorgesehen sein, oder das Element 52 kann in der Mitte zwischen der ersten und der zweiten Festelektrolytschicht 21, 22 angeordnet sein. Das Element 52 kann sich auch über die innere Mantelfläche der Diffusionsbarriere 51 hinaus in die Gaszutrittsöffnung 36 erstrecken und sogar zylindrisch geformt sein und den Boden der Gaszutrittsöffnung 36 bilden.

Das in Figur 3 und 4 dargestellte zweite Ausführungsbeispiel der Erfindung unterscheidet sich vom ersten Ausführungsbeispiels in der Ausgestaltung des gasundurchlässigen Elements im Bereich der inneren Mantelfläche der Diffusionsbarriere 51. Einander entsprechende Elemente wurden beim ersten und beim zweiten Ausführungsbeispiel mit denselben Bezugszeichen bezeichnet.

Beim zweiten Ausführungsbeispiel sind in eine Diffusionsbarriere 151 vier gleichmäßig angeordnete pfeilerartige Elemente 152 eingebracht, die gasundurchlässig sind und damit den Diffusionsquerschnitt auf der der zweiten und dritten Elektrode 42, 43 abgewandten Seite der Diffusionsbarriere 151 vermindern. Die Elemente 152 erstrecken sich über die gesamte Höhe der Diffusionsbarriere 151. Zwischen den Elementen 152 kann das Messgas durch die Diffusionsbarriere 151 zu der zweiten und dritten Elektrode 42, 43 in den Messgasraum 31 gelangen.

## Patentansprüche

1. Sensorelement (10) zur Bestimmung der Konzentration eines Gasbestandteils eines Messgas, mit mindestens einer auf einem Festelektrolyten (21, 22) aufgebrachten Elektrode (42, 43), die mit dem Messgas über eine Diffusionsweg verbunden ist, in dem eine Diffusionsbarriere (51, 151) angeordnet ist wobei auf der der Elektrode (42, 43) abgewandten Seite der Diffusionsbarriere (51,151) ein Mittel (52, 152) vorgesehen ist, durch das der Diffusionsquerschnitt auf der der Elektrode (42, 43) abgewandten Seite der Diffusionsbarriere (51, 151) verringert ist, wobei die Diffusionsbarriere (51, 151) eine im wesentlichen zylindrische oder hohlzylindrische Form hat, **dadurch gekennzeichnet, dass** die Elektrode (42, 43) ringförmig ist und die Diffusionsbarriere (51, 151) umgibt, so dass das Abgas durch eine Gaszutrittsöffnung (36) in den inneren Bereich der Diffusionsbarriere (51, 151) und von dort über die Diffusionsbarriere (51, 151) zur Elektrode (42, 43) gelangen kann, wobei

$$\frac{A_1}{r_1} > \frac{A_2}{r_2},$$

wobei die Radien $r_1$ und $r_2$ auf die Mittelachse der Diffusionsbarriere (51, 151) bezogen sind, wobei $A_1$ den Diffusionsquerschnitt mit dem Abstand $r_1$ zur Mittelachse der Diffusionsbarriere (51, 151) und $A_2$ den Diffusionsquerschnitt mit dem Abstand $r_2$ zur Mittelachse der Diffusionsbarriere (51, 151) bezeichnet, wobei das den Diffusionsquerschnitt verkleinernde Mittel im Abstand $r_2$, aber nicht im Abstand $r_1$ zur Mittelachse der Diffusionsbarriere (51, 151) liegt, und wobei $r_1$ größer als $r_2$ ist.

2. Sensorelement nach Anspruch 1, **dadurch gekennzeichnet, dass** das Mittel (52, 152) einen niedrigeren Porenanteil als die Diffusionsbarriere (51, 151) aufweist und/oder gasundurchlässig ist.

3. Sensorelement nach Anspruch 1 oder 2, **dadurch gekennzeichnet, dass** das Mittel ein ringförmiges Element (52) ist, das auf der inneren Mantelfläche der Diffusionsbarriere (51) und/oder in der Gaszutrittsöffnung (36) vorgesehen ist.

4. Sensorelement nach Anspruch 1 oder 2, **dadurch gekennzeichnet, dass** das Mittel mindestens ein pfeilerartiges Element (152) ist, das auf der inneren Mantelfläche der Diffusionsbarriere (151) und/oder in der Gaszutrittsöffnung (36) vorgesehen ist.

5. Sensorelement nach Anspruch 4, **dadurch gekennzeichnet, dass** die Höhe des pfeilerartigen Elements (152) der Höhe der Diffusionsbarriere (151) entspricht.

## Claims

1. Sensor element (10) for determining the concentration of a gas constituent of a test gas, comprising at least one electrode (42, 43), which is placed on a solid electrolyte (21, 22) and which is connected to the test gas via a diffusion path in which a diffusion barrier (51, 151) is arranged, wherein a means (52, 152) by which the diffusion cross section on the side of the diffusion barrier (51, 151) that is facing away from the electrode (42, 43) is reduced is provided on the side of the diffusion barrier (51, 151) that is facing away from the electrode (42, 43), the diffusion barrier (51, 151) having a substantially cylindrical or hollow-cylindrical form, **characterized in that** the electrode (42, 43) is annular and surrounds the diffusion barrier (51, 151), so that the exhaust gas can pass through a gas inlet opening (36) into the inner region of the diffusion barrier (51, 151) and from there via the diffusion barrier (51, 151) to the electrode (42, 43), wherein

$$\frac{A_1}{r_1} > \frac{A_2}{r_2},$$

where the radii $r_1$ and $r_2$ are in relation to the centre axis of the diffusion barrier (51, 151), where $A_1$ denotes the diffusion cross section with the distance $r_1$ from the centre axis of the diffusion barrier (51, 151) and $A_2$ denotes the diffusion cross section with the distance $r_2$ from the centre axis of the diffusion barrier (51, 151), wherein the means reducing the diffusion cross section lies at the distance $r_2$, but not at the distance $r_1$ from the centre axis of the diffusion barrier (51, 151), and wherein $r_1$ is greater than $r_2$.

2. Sensor element according to Claim 1, **characterized in that** the means (52, 152) has a lower proportion of pores than the diffusion barrier (51, 151) and/or is gas-impermeable.

3. Sensor element according to Claim 1 or 2, **characterized in that** the means is an annular element (52), which is provided on the inner lateral surface of the diffusion barrier (51) and/or in the gas inlet opening (36).

4. Sensor element according to Claim 1 or 2, **characterized in that** the means is at least one column-like element (152), which is provided on the inner lateral surface of the diffusion barrier (151) and/or in the gas inlet opening (36).

5. Sensor element according to Claim 4, **characterized in that** the height of the column-like element (152) corresponds to the height of the diffusion barrier (151).

**Revendications**

1. Elément de détection (10) destiné à déterminer la concentration d'un composant gazeux d'un gaz à mesurer, l'élément comportant au moins une électrode (42, 43) appliquée sur un électrolyte solide (21, 22) et reliée au gaz à mesurer par l'intermédiaire d'un parcours de diffusion, une barrière (51, 151) à la diffusion étant disposée dans l'élément de détection et un moyen (52, 152) par lequel la section transversale de diffusion est diminuée sur le côté de la barrière (51, 151) à la diffusion non tourné vers l'électrode (42, 43) étant prévu sur le côté de la barrière (51, 151) à la diffusion non tourné vers l'électrode (42, 43), la barrière (51, 151) à la diffusion présentant essentiellement la forme d'un cylindre ou d'un cylindre creux,
**caractérisé en ce que**
l'électrode (42, 43) a une forme annulaire et entoure la barrière (51, 151) à la diffusion de telle sorte que les gaz d'échappement peuvent aboutir à l'électrode (42, 43) à travers une ouverture (36) d'amenée de gaz ménagée dans la partie intérieure de la barrière (51, 151) à la diffusion et de là à travers la barrière (51, 151) à la diffusion,
**en ce que**

$$\frac{A_1}{r_1} > \frac{A_2}{r_2}$$

dans laquelle les rayons $r_1$ et $r_2$ sont rapportés à l'axe central de la barrière (51, 151) à la diffusion, $A_1$ désignant la section transversale de diffusion à la distance $r_1$ de l'axe central de la barrière (51, 151) à la diffusion et $A_2$ la section transversale de diffusion à la distance $r_2$ de l'axe central de la barrière (51, 151) à la diffusion, le moyen diminuant la section transversale de diffusion étant situé à la distance $r_2$ mais non à la distance $r_1$ de l'axe central de la barrière (51, 151) à la diffusion et $r_1$ étant supérieur à $r_2$.

2. Elément de détection selon la revendication 1, **caractérisé en ce que** le moyen (52, 152) présente une teneur en pores plus basse que la barrière (51, 151) à la diffusion et/ou est imperméable aux gaz.

3. Elément de détection selon les revendications 1 ou 2, **caractérisé en ce que** le moyen est un élément annulaire (52) qui est prévu sur la surface d'enveloppe intérieure de la barrière (51) à la diffusion et/ou dans l'ouverture (36) d'amenée de gaz.

4. Elément de détection selon les revendications 1 ou 2, **caractérisé en ce que** le moyen est au moins un élément (152) en forme de flèche qui est prévu sur la surface d'enveloppe intérieure de la barrière (151) à la diffusion et/ou dans l'ouverture (36) d'amenée de gaz.

5. Elément de détection selon la revendication 4, **caractérisé en ce que** la hauteur de l'élément (152) en forme de flèche correspond à la hauteur de la barrière (151) à la diffusion.

# Fig. 1

EP 1 581 806 B1

EP 1 581 806 B1

Fig. 2

Fig. 3

7

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10013882 A1
- EP 0016423 A